# EUROPEAN PATENT SPECIFICATION

(11) **EP 0 947 715 B1**
(45) Date of publication and mention of the grant of the patent: **12.03.2003**
(21) Application number: 99106524.4
(22) Date of filing: 30.03.1999
(51) Int. Cl.: F16B 33/02, F16B 5/01

(54) **Screw for fibrous material**
Schraube für Fasermaterial
Vis pour matériaux fibreux

(30) Priority: 03.04.1998 CA 2234040
(43) Date of publication of application: 06.10.1999
(73) Proprietor: Walther, Uli, Thunder Bay Ontario P7C 4V2 (CA); Walther, Gerda, Thunder Bay Ontario P7C 4V2 (CA); Walther, Mirco, Thunder Bay, Ontario P7E 6N3 (CA); Walther, Thorsten, Thunder Bay, Ontario P7B 3YB (CA)
(72) Inventor: Walther, Uli, Thunder Bay, Ontario P7C 4V2 (CA); Walther, Mirco, Thunder bay, Ontario P7E 6N3 (CA); Walther, Thorsten, Thunder Bay, Ontario P7B 3Y8 (CA)
(74) Representative: Hörner, Andreas

(56) References cited:
- EP-A- 0 553 907
- US-A- 3 472 119

## Description

This invention relates to woodscrews as described in the preamble of claim 1.

Most of the known wood screws are provided with a smooth, continuous thread. This arrangement is satisfactory where the density of the workpiece of fibrous material is relatively low or where a pilot hole is provided. However, when the wood, fibrous board or the like fibrous material is relatively dense, a high torque may be required to drive the screw fully into the workpiece. It is not uncommon, particularly with the use of a power screwdriver, that the screw breaks during the installation.

PCT Publication WO 98/44268 published October 8, 1998 describes the structure of a wood screw the purpose of which is to facilitate the driving of the screw into hard wood. The thread of the screw is provided with a number of V-shaped notches. It is described as essential that the notches begin at the point of the screw. The disclosed thread with V-shaped notches thus extends over the entire length of the shank of the screw. UK Patent Specification 1,120,991 describes a wood screw wherein the thread on the shank is provided with grooves extending helically for substantially the full length of the threaded portion. Thus the thread is transformed into a number of radially outwardly projecting protuberances.

The drawback of the screws described in the two patent specifications is in that they substantially weaken the overall torque strength of the screw and are thus prone to breakage particularly when used with a power screwdriver. Also, the cutouts, particularly at the tip of the screw, do not provide sufficient space for debris formed by the cutting edge of the respective cutout.

It is an object of the invention to facilitate the installation of screws in a fibrous workpiece such as a wood workpiece by reducing the force required to drive the screw into the workpiece, retaining a good torque strength of the screw and avoiding the tendency of self-loosening of the installed screw.

This object is attained by a screw having the features of the characterizing clauses of claim 1. Further features of the present invention are apparent from the characterizing clauses of the remaining dependent claims.

The screw of the present invention is intended mainly for woodscrews or the like having the length of about one inch or more. The screw of the invention has the advantage of a reduced resistance to the driving force when the screw is driven into a workpiece. It has been found that the invention achieves reduction of the torque required by about 30% over known woodscrews. This reduces and in many cases eliminates the occurrence of breakages of the shanks of power driven screws of the present invention. While the drive-in torque stress is reduced, once the screw is in place, it does not have the tendency to become loose.

The invention will now be described by way of a preferred and exemplary embodiments, with reference to the accompanying diagrammatic, not-to-scale drawings.
- Figure 1: is a side view of a screw of the present invention;
- Figure 2: is a diagrammatic sectional view taken along a section line II-II of Fig. 1 and showing one turn or convolute of the thread in a flattened-out condition to indicate the preferred distribution of the cutouts and their depth;
- Figures 3, 4 and 5: are partial views corresponding to Fig. 2 and showing the geometry of the cutout of further exemplary embodiments; and
- Figure 6: is a perspective view of a yet another embodiment of the present invention.

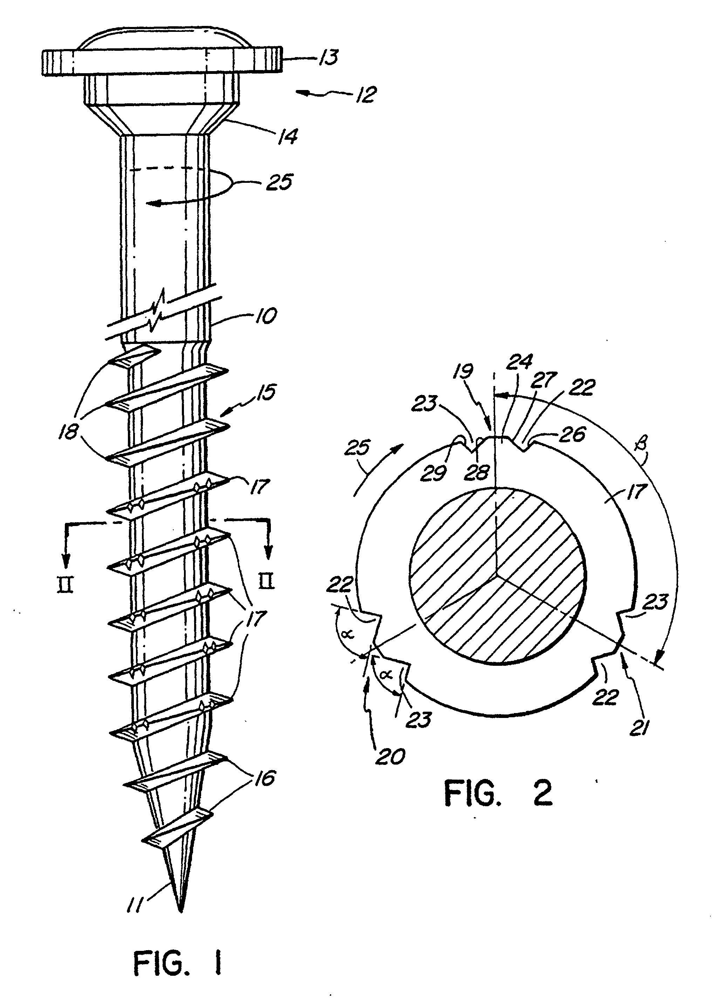

The screw of Fig. 1 is integrally formed and comprises a cylindric shank portion 10 merging, at a first end, into a tapering tip portion 11. The opposite, second end of the shank portion 10 merges with a head end portion 12. The head end portion may have a gradually increased diameter to provide a smooth transition to a head 13, for instance, a frustoconical transitional section 14. A helical thread 15 extends from the head 13. Reference number 25 designates the direction of turning the screw to drive same into a workpiece.

The embodiment shown is a screw having the length of about 250mm. The recommended minimum length of the shank to fully benefit from the present invention is 30mm (1¼"). The embodiment of the shank 10 shown has a total of ten convolutes or turns. Proceeding from the tip 11, there is a first thread portion having about two turns 16 which are continuous and are devoid of the cutouts. The next, intermediate, limited thread portion includes, in the embodiment shown, about five turns 17 and, finally, near the head end portion 12, there are about three turns 18 of the third thread portion.

Each turn 17 of the limited portion is provided with radially inwardly directed cutouts (Fig. 2) 19, 20, 21. The cutouts of the first embodiment, which is preferred, will now be described in greater detail by describing, for the sake of simplicity, only one cutout 19 with reference to Fig. 2, it being understood that it is preferred, but not absolutely vital, that the remaining cutouts be of a generally identical shape.

The recommended minimum length of the shank of the screw to fully benefit from the present invention is about 30mm. From the standpoint of torsional strength of the screw of the present invention, the number of threads 17, of the limited, intermediate portion is preferably selected in dependence on the overall length of the stem of the screw. For instance, screws with shanks 30mm (1¼") to 140mm long, should have about 3 turns of threads 17 with the cutouts. Those with shank length of about 150 to about 240mm are preferably provided with four turns of threads 17 and those over 250mm preferably have 5 turns of threads 17. As mentioned above, the threads 17 have each three cutouts 19-21 at an equidistant arcuate spacing.

The cutouts 19, 20, 21 are spaced from each other at an angle β of about 120° which provides three cutouts per each convolute 17. Each cutout, is comprised of a pair of closely spaced V-shaped or triangular, radially inwardly narrowing cutout sections 22, 23 whereby the cutout 19 has the general configuration of the letter W, defining a central tooth 24 between the cutout sections 22, 23. It can be seen from the drawings that the radial depth of each cutout 19, 20, 21 is smaller than the width of the thread at the turn 17.

When viewed from the standpoint of direction 25 of rotation driving the screw into a workpiece, the cutout section 22 is a front cutout section and the cutout section 23 is a rear cutout section. The cutout sections 22, 23 of the embodiment in Fig. 2 are so arranged and disposed that the tooth 24 has the shape of a trapezoid. The front cutout section 22 has a forward edge 26 and a back edge 27. Similarly, the rear cutout section 23 has a forward edge 28 and a back edge 29.

The back edge 27 defines a cutting edge of the tooth 24 and the forward edge 28 of the rear cutout section 23 defines a trailing edge of the tooth 24. The cutout sections 22, 23 of each cutout define a void before and after the tooth 24, for debris generated by the tooth of the same cutout 19 or of the preceding cutout 21.

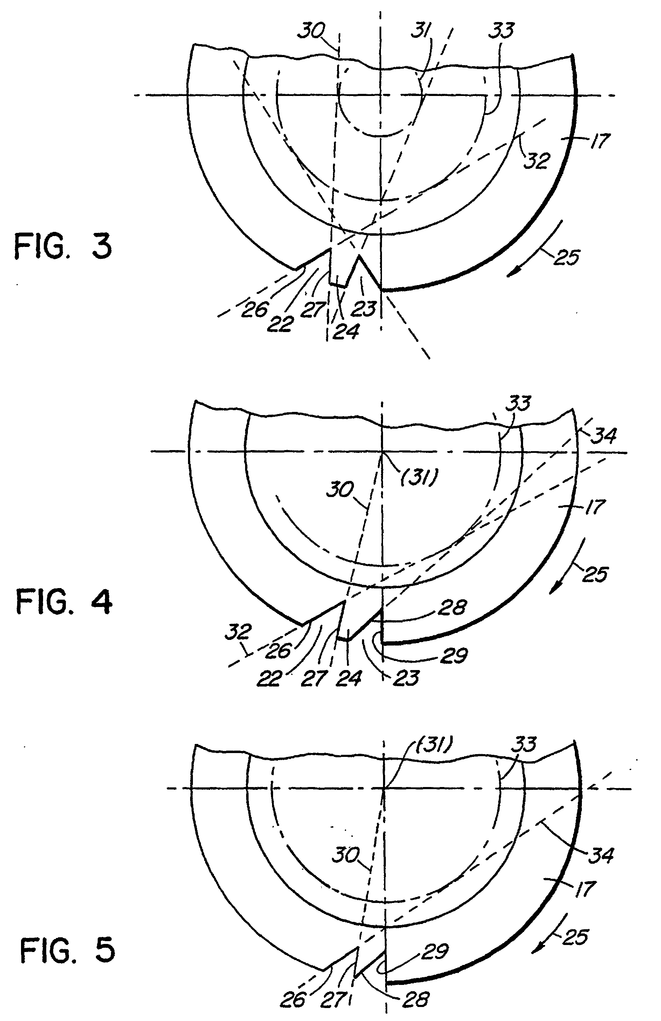

Fig. 2 shows that the combined width of the three cutouts 19-21 measured peripherally at the crest of the thread 17 is about one-third of the circumference of one convolute of the thread. In Figs. 3 - 5, the width is smaller.

In the embodiment of Fig. 2, each cutout section 22, 23 is so disposed that the angle a between the forward edge 26, 28 and the back edge 27, 29 is about 90°. This relationship is not present in further embodiments as will now be described with reference to Figs. 3 - 5 where the same reference numbers have been used to designate the corresponding elements of the screw.

Turning to Fig. 3, the angle between the forward edge 26 and the back edge 27 (corresponding to angle α in Fig. 2) is an acute angle. The disposition of the edges 26 and 27 is such that the cutting edge 27 of the tooth 24, is on a line 30 tangent to a first reference circle 31 concentric with the axis of the shank portion 10. The edge 26, however, is on a line 32 tangent to a second reference circle 33. The diameter of the reference circle 31 is smaller than that of the reference circle 33. Accordingly, the cutting edge 27 in Fig. 3 is radially steeper with respect to the centre of the shank portion 10 than in Fig. 2. The rear cutout section 23 is a mirror image of the front cutout section 22.

The radial steepness of the cutting edge 27 increases with the reduction of the diameter of the reference circle 31 and decreases with the enlargement of such diameter. Thus, the maximum radial steepness is the steepness where the diameter of the first reference circle is zero, i.e. it is the centre of the shank.

The overall peripheral width of this embodiment is substantially smaller than about one-third of the circumference of one turn 17 of the thread, to provide a good pullout resistance while retaining the advantage of having two voids for the debris made by the tooth 24.

In the embodiment of Fig. 4, the cutout sections 22, 23 are not mirror images of each other as in Figs. 2 and 3. Instead, they are identical with each other. The line 30 of the cutting edge 27 of the tooth 24 displays a maximum degree of radial steepness since the line 30 passes through the centre (31) of the shank portion 10. In other words, the reference circle 30 has a zero diameter and is the centre of the shank. Thus, the cutting edge 27 extends exactly radially. On the other hand, the forward edge 26 of the recess 22 is tangent to the second reference circle 33. The forward and the back edges 28, 29 of the rear cutout section 23 are arranged in the same order as the edges 26, 27 of the front cutout section 22. Thus, the line 34 of the forward edge 28 of the cutout section 23 is a tangent to the reference circle 33, while the back edge is radial. The angle, corresponding to angle α of Fig. 2, of both V-shaped recesses of Fig. 4 is an acute angle, in the embodiment shown, about 45°. This embodiment presents a further reduction of the peripheral width of the cutout 19.

The embodiment of Fig. 5 is similar to that of Fig. 4 with respect to the angles of the forward and back edges 26, 27, 28, 29 but the overall width of the tooth 24 and if the overall cutout 19 is smaller. This results in a triangular shape of the tooth 24 and in a smaller overall width of the cutout 19. While the drawings show that the combined width of the cutouts 19 - 21 is about one third or less of the overall periphery of the crest of the thread in one convolute 17. The width of the embodiment of Fig. 5 is the smallest of those shown while sufficient space is provided for fibrous debris.

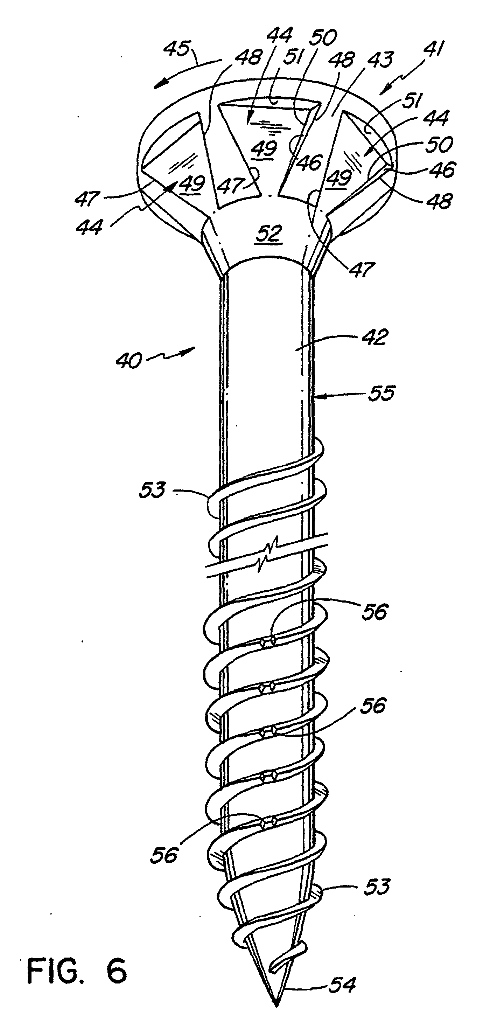

Fig. 6 shows that the self-tapping screw of the present invention can advantageously be combined with a self-countersinking feature.

The embodiment shown presents a self-tapping and self-countersinking screw 40 being a head 41 and a threaded shank 42. The head 41 has an inverted-conical underside 43. There is a plurality of generally triangular recesses 44.

Each recess 44 comprises, from the standpoint of the direction 45 of rotation driving the screw into a workpiece, a trailing wall 46 and a leading boundary 47. The trailing wall 46 forms a cutting edge 48 at the merger of the trailing wall 46 with the underside 43.

In the embodiment of Fig. 6, the leading boundary 47 is an obtuse angled corner between a flat, planar bottom wall 49 and the underside 43. The bottom wall 49 merges, at the trailing end of the recess 44, with a bottom corner 50 where the bottom wall 49 adjoins the trailing wall 46. The trailing wall 46 increases in height in the direction towards the top of the head 41. In other words, the inclination of the bottom wall 49 is such that the depth of the recess 45 and thus its volume is at a maximum at the part near the periphery the top of the head 41.

The leading boundary 47 and the cutting edge 48 converge with each other in the direction toward the of the screw 40. The leading boundary and the cutting edge 48 of each recess 44 are preferably straight. They do not in fact intersect each other at their lower ends. The overall contour of the recess 45 can nevertheless be referred to as being "generally" triangular.

The generally triangular contour of each recess 44 is enclosed by a generally planar upper boundary wall 51 which extends between upper ends of the trailing wall 46 and of the leading boundary 47 in a circumferential direction and is generally radial with respect to the axis of the screw 40. The walls 51 of all recesses 44 are coplanar with one another.

The upper boundary wall 51 merges with the obtuse angled edge of the leading boundary 47, and has a zero width the merger. On the contrary, at the trailing wall 46, the radial width of the boundary wall 51 is higher due to the inclination of the planar bottom wall 49. The bottom wall 49 slopes into the respective recess 44 in the direction from the leading boundary 47 to the corner between the trailing wall 46 and the upper boundary wall 51. Thus, the depth of the recess 44 is at a maximum at the corner of the walls 51 and 46. A tapered intermediate portion 52 is formed between the head 41 and the threaded shank 42.

As in the previously described embodiments, a helical thread 53 extends from the tapering tip 54 to a point 55 which may be axially spaced from the head 41.

The embodiment shown has a total of ten convolutes or turns. Proceeding from the tip 54, there is a first thread portion having about three turns which are devoid of any cutouts. The next, second or intermediate thread portion which is provided with W-shaped cutouts 56, includes about four to five turns. The geometry and density of the cutouts is generally the same as described above. Finally, near the head 41, there are about three turns of a smooth thread.

## Claims

1. A screw for use in fibrous material such as wood, comprising
(a) a shank (10, 42) having a first end defining a pointed tip (11, 54), an opposed second end and a. thread (15, 53) extending over at least a portion of the overall axial length of the shank (10, 42);
(b) a portion (17) of an overall length of the thread (15, 53) being provided with a system of radially inwardly directed cutouts (19, 20, 21, 56) disposed at a predetermined spacing from each other;
**characterized in that**
(c) said system (17) of cutouts is comprised of a plurality of generally W-shaped cutouts (19, 20, 21, 56) each defining a central tooth (24).

2. The screw according to claim 1, **characterized in that** said portion (17) of the thread (15, 53) is axially spaced from the first end (11, 54) of the shank (10, 42) such that a number of convolutes (16) of the thread at the tip (11) of the screw are devoid of said cutouts.

3. The screw according to claim 1 or claim 2 **characterized in that** said portion (17) of the thread (15, 53) is an intermediate portion (17), said thread (15, 53) further including a number of thread convolutes (18) devoid of said cutouts and disposed between said intermediate portion (17) and the second end of the shank (10, 42).

4. The screw according to any one of claims 1 - 3 wherein the length of the shank (10, 42) is at least about 30mm, **characterized in that** said intermediate portion (17) encompasses about five convolutes (17) of the thread (15, 53).

5. The screw of any one of claims 1 - 4, wherein the length of the shank is at least about 30mm, **characterized in that** said first end (11, 54) includes about two convolutes (16) of the thread (15, 53) devoid of the cutouts (19 - 21; 56).

6. The screw of any one of claims 1 - 5 wherein the shank (10, 42) is at least about 30mm long, **characterized in that** there are about three cutouts (19, 20, 21; 56) per one convolute of the intermediate portion.

7. The screw according to any one of claims 1 - 6 **characterized in that** the combined width of said cutouts (19, 20, 21) of one convolute (17), measured peripherally at a crest portion of the thread (15, 53) is about one-third or less of the overall periphery of the convolute (17).

8. The screw according to any one of claims 1-7 **characterized in that** the cutout sections (22, 23) forming the W-shaped cutouts are of a triangular contour wherein a radially inner angle (α) is a right angle.

9. The screw according to claim 8, **characterized in that** the contour of the tooth (24) is generally trapezoidal.

10. The screw according to claim 8 or claim 9, **characterized in that** said radially inner angle is an acute angle (α).

11. The screw according to any one preceding claims, **characterized in that** the cutting edge (27) of the central tooth (24) is disposed on radial line (30) relative to the centre (31) of the screw.

12. The screw according to any one of claims 1 - 11 **characterized in that** the radial depth of each cutout (19 - 21; 56) is smaller than the width of the thread (15; 53) at the cutout (19 - 21; 56).

13. The screw according to claim 1, comprising a head (41) at said second end portion, said head including an inversely frustoconical underside (43), a plurality of generally triangular recesses (44) in said underside (43), said recesses having straight sides (47, 48, 51) each recess (44) comprising from the standpoint of a direction (45) of driving rotation of the screw (40) into a workpiece, a generally planar trailing wall (46) forming a linear cutting edge (48) coincident with said frusto-conical underside (43), each said recess (44) further including a leading boundary (47) convergent with said cutting edge (48) in the direction along said underside and towards the axis of the screw (40), a generally planar upper boundary wall (51) extending between upper ends of said trailing wall (46) and said leading boundary (47) in a circumferential direction and disposed at a spacing from the top of the head (41) along said frusto-conical underside (43); and a flat, generally triangular bottom (49), **characterized in that** the portion of the thread (53) provided with the cutouts is axially spaced from the tip (54) such that a number of convolutes of the thread at the tip (11) of the screw are devoid of said cutouts (56).

14. The screw according to claim 13, **characterized in that** said portion of the thread (53) provided with the cutouts (56) is an intermediate portion, said thread (53) further including a number of thread convolutes devoid of said cutouts and disposed between said intermediate portion and the head (41) of the screw.

15. The screw according to any one of the preceding claims, **characterized in that** where the overall length of the shank is from about 30mm to about 140mm, the number of the convolutes (17) of the intermediate portion is about 3.

16. The screw according to any one of claims 1 - 14, **characterized in that** where the overall length of the shank is from about 150mm to about 240mm, the number of the convolutes (17) of the intermediate portion is about 4.

17. The screw according to any one of claims 1 - 14, **characterized in that** where the overall length of the shank is over about 250mm, the number of the convolutes (17) of the intermediate portion is about 5.

## Patentansprüche

1. Schraube zur Verwendung in einem Fasermaterial wie z.B. Holz, umfassend
(a) einen Schaft (10, 42) mit einem ersten Ende, welches eine spitz zulaufende Spitze (11, 54) definiert, einem gegenüberliegenden zweiten Ende und einem sich über mindestens einen Teil der axialen Gesamtlänge des Schaftes (10, 42) erstreckenden Gewinde (15, 53);
(b) einen Bereich (17) von einer axialen Gesamtlänge des Gewindes (15, 53), welcher mit einem System von radial einwärts gerichteten Ausschnitten (19, 20, 21, 56) versehen ist, die mit einem bestimmten Abstand voneinander angeordnet sind,
**dadurch gekennzeichnet, dass**
(c) das System (17) von Ausschnitten von einer Mehrzahl von im Wesentlichen W-förmigen Ausschnitten (19, 20, 21, 56) gebildet ist, von denen jeder einen zentralen Zahn (24) definiert.

2. Schraube nach Anspruch 1, **dadurch gekennzeichnet, dass** der Bereich (17) des Gewindes (15, 53) von dem ersten Ende (11, 54) des Schaftes (10, 42) axial beabstandet ist, so dass eine Anzahl von Windungen (16) des Gewindes an der Spitze (11) der Schraube frei von den Ausschnitten ist.

3. Schraube nach Anspruch 1 oder Anspruch 2, **dadurch gekennzeichnet, dass** der Bereich (17) des Gewindes (15, 53) ein Zwischenbereich (17) ist, wobei das Gewinde (15, 53) ferner eine Anzahl von Gewindewindungen (18) aufweist, die frei von den Ausschnitten sind und zwischen dem Zwischenbereich (17) und dem zweiten Ende des Schaftes (10, 42) angeordnet sind.

4. Schraube nach einem der Ansprüche 1 bis 3, wobei die Länge des Schaftes (10, 42) mindestens ca. 30 mm beträgt, **dadurch gekennzeichnet, dass** der Zwischenbereich (17) ca. fünf Windungen (17) des Gewindes (15, 53) umfasst.

5. Schraube nach einem der Ansprüche 1 bis 4, wobei die Länge des Schaftes mindestens ca. 30 mm beträgt, **dadurch gekennzeichnet, dass** das erste Ende (11, 54) ca. zwei Windungen (16) des Gewindes (15, 53) aufweist, die frei von den Ausschnitten (19 bis 21; 56) sind.

6. Schraube nach einem der Ansprüche 1 bis 5, wobei der Schaft (10, 42) mindestens ca. 30 mm lang ist, **dadurch gekennzeichnet, dass** ca. drei Ausschnitte (19, 20, 21; 56) pro Windung des Zwischenbereichs vorhanden sind.

7. Schraube nach einem der Ansprüche 1 bis 6, **dadurch gekennzeichnet, dass** die kombinierte Breite der Ausschnitte (19, 20, 21) von einer Windung (17), peripher an einem Spitzenbereich des Gewindes (15, 53) gemessen, ca. 1/3 oder weniger der Gesamtperipherie der Windung (17) beträgt.

8. Schraube nach einem der Ansprüche 1 bis 7, **dadurch gekennzeichnet, dass** die die W-förmigen Ausschnitte bildenden Ausschnittsabschnitte (22, 23) eine Dreieckskontur aufweisen, worin ein radial innenliegender Winkel (α) ein rechter Winkel ist.

9. Schraube nach Anspruch 8, **dadurch gekennzeichnet, dass** die Kontur des Zahnes (24) im Wesentlichen trapezförmig ist.

10. Schraube nach Anspruch 8 oder Anspruch 9, **dadurch gekennzeichnet, dass** der radial innenliegende Winkel ein spitzer Winkel (α) ist.

11. Schraube nach einem der voranstehenden Ansprüche, **dadurch gekennzeichnet, dass** die Schneidkante (27) des zentralen Zahnes (24) auf einer radialen Linie (30) relativ zu dem Zentrum (31) der Schraube angeordnet ist.

12. Schraube nach einem der Ansprüche 1 bis 11, **dadurch gekennzeichnet, dass** die radiale Tiefe jedes Ausschnittes (19 bis 21; 56) kleiner ist als die Breite des Gewindes (15; 53) an dem Ausschnitt (19 bis 21; 56).

13. Schraube nach Anspruch 1, umfassend einen Kopf (41) an dem zweiten Endbereich, wobei der Kopf eine umgekehrt stumpfkegelige Unterseite (43) aufweist mit einer Mehrzahl von im Wesentlichen dreieckigen Aussparungen (44) in der Unterseite (43), wobei die Aussparungen gerade Seiten (47, 48, 51) aufweisen, wobei jede Aussparung (44), gesehen in Richtung (45) des Eindrehens der Schraube (40) in ein Werkstück, eine im Wesentlichen planare hintere Wand (46) umfasst, welche eine lineare Schneidkante (48) bildet, die mit der stumpfkegeligen Unterseite (43) zusammenfällt, wobei jede Aussparung (44) ferner aufweist: eine vordere Begrenzung (47), welche mit der Schneidkante (48) in Richtung längs der Unterseite und zu der Achse der Schraube (40) hin konvergent ist, eine im Wesentlichen planare obere Begrenzungswand (51), die sich zwischen oberen Enden der hinteren Wand (46) und der vorderen Begrenzung (47) in Umfangsrichtung erstreckt und in einem Abstand vom oberen Teil des Kopfes (41) längs der stumpfkegeligen Unterseite (43) angeordnet ist; und einen flachen, im Wesentlichen dreieckigen Boden (49), **dadurch gekennzeichnet, dass** der mit den Ausschnitten versehene Bereich des Gewindes (53) von der Spitze (54) axial beabstandet ist, so dass eine Anzahl von Windungen des Gewindes an der Spitze (11) der Schraube frei von den Ausschnitten (56) ist.

14. Schraube nach Anspruch 13, **dadurch gekennzeichnet, dass** der mit den Ausschnitten (56) versehene Bereich des Gewindes (53) ein Zwischenbereich ist, wobei das Gewinde (53) ferner eine Anzahl von Gewindewindungen aufweist, die frei von den Ausschnitten sind und zwischen dem Zwischenbereich und dem Kopf (41) der Schraube angeordnet sind.

15. Schraube nach einem der voranstehenden Ansprüche, **dadurch gekennzeichnet, dass** in den Fällen, wo die Gesamtlänge des Schaftes ca. 30 mm bis ca. 140 mm beträgt, die Zahl der Windungen (17) des Zwischenbereichs ca. 3 beträgt.

16. Schraube nach einem der Ansprüche 1 bis 14, **dadurch gekennzeichnet, dass** in den Fällen, wo die Gesamtlänge des Schaftes ca. 150 mm bis ca. 240 mm beträgt, die Zahl der Windungen (17) des Zwischenbereichs ca. 4 beträgt.

17. Schraube nach einem der Ansprüche 1 bis 14, **dadurch gekennzeichnet, dass** in den Fällen, wo die Gesamtlänge des Schaftes über ca. 250 mm ist, die Zahl der Windungen (17) des Zwischenbereichs ca. 5 beträgt.

## Revendications

1. Vis destinée à être utilisée pour les matériaux fibreux tel que le bois, comprenant (a) une tige (10, 42) ayant une première extrémité qui définie une pointe pointue (11, 54), une seconde extrémité opposée et un filetage (15, 53) qui s'étend sur au moins une partie de la longueur axiale totale de la tige (10, 42) ; (b) une partie (17) d'une longueur totale du filetage (15, 53) qui est prévue avec un système de découpes dirigées vers l'intérieur de façon radiale (19, 20, 21, 56) disposées selon un espacement prédéterminé les unes des autres ; **caractérisée en ce que** (c) ledit système (17) de découpes se compose d'une pluralité de découpes généralement en forme de W (19, 20, 21, 56) chacune définissant une dent centrale (24).

2. Vis selon la revendication 1, **caractérisée en ce que** ladite partie (17) du filetage (15, 53) est espacée de façon axiale à partir de la première extrémité (11, 54) de la tige (10, 42) de sorte qu'un certain nombre d'enroulements (16) du filetage au niveau de la pointe (11) de la vis sont dépourvus desdites découpes.

3. Vis selon la revendication 1 ou la revendication 2 **caractérisée en ce que** ladite partie (17) du filetage (15, 53) est une partie intermédiaire (17), ledit filetage (15, 53) comprenant en outre un certain nombre d'enroulements de filetage (18) dépourvus desdites découpes et disposé entre ladite partie intermédiaire (17) et la seconde extrémité de la tige (10, 42).

4. Vis selon l'une quelconque des revendications 1 à 3 dans laquelle la longueur de la tige (10, 42) est d'au moins environ 30 mm, **caractérisée en ce que** ladite partie intermédiaire (17) renferme environ cinq enroulements (17) du filetage (15, 53).

5. Vis selon l'une quelconque des revendications 1 à 4, dans laquelle la longueur de la tige est d'au moins environ 30 mm, **caractérisée en ce que** ladite première extrémité (11, 54) comprend environ deux enroulements (16) du filetage (15, 53) dépourvus de découpes (19 - 21 ; 56).

6. Vis selon l'une quelconque des revendications 1 à 5 dans laquelle la tige (10, 42) est d'au moins environ 30 mm de long, **caractérisée en ce qu'**il y a environ trois découpes (19, 20, 21 ; 56) pour un enroulement de la partie intermédiaire.

7. Vis selon l'une quelconque des revendications 1 à 6 **caractérisée en ce que** la largeur combinée desdites découpes (19, 20, 21) d'un enroulement (17) mesuré de façon périphérique à une partie de crête du filetage (15, 53) est d'environ un tiers ou moins de la périphérie totale de l'enroulement (17).

8. Vis selon l'une quelconque des revendications 1 à 7 **caractérisée en ce que** les sections de découpe (22, 23) qui forment les découpes en forme de W ont un contour triangulaire dans lequel un angle interne de façon radiale (α) est un angle droit.

9. Vis selon la revendication 8, **caractérisée en ce que** le contour de la dent (24) est généralement trapézoïdal.

10. Vis selon la revendication 8 ou la revendication 9, **caractérisée en ce que** ledit angle interne de façon radiale est un angle aigu (α).

11. Vis selon l'une quelconque des revendications précédentes, **caractérisée en ce que** le bord de coupe (27) de la dent centrale (24) est disposé sur la ligne radiale (30) relative au centre (31) de la vis.

12. Vis selon l'une quelconque des revendications 1 à 11 **caractérisée en ce que** la profondeur radiale de chaque découpe (19 - 21 ; 56) est inférieure à la largeur du filetage (15 ; 53) au niveau de la découpe (19 - 21 ; 56).

13. Vis selon la revendication 1, comprenant une tête (41) au niveau de ladite seconde partie d'extrémité, ladite tête comprenant une surface inférieure inversement tronconique (43), une pluralité d'enfoncements généralement triangulaires (44) situés dans ladite surface inférieure (43), lesdits enfoncements ayant des côtés droits (47, 48, 51) chaque enfoncement (44) comprenant du point de vue d'une direction (45) de la rotation d'entraînement de la vis (40) dans une pièce, une paroi arrière généralement plane (46) qui forme un bord de coupe linéaire (48) qui coïncide avec ladite surface inférieure tronconique (43), chacun desdits enfoncements (44) comprenant en outre une limite avant (47) convergente avec ledit bord de coupe (48) dans la direction le long de ladite surface inférieure et vers l'axe de la vis (40), une paroi de limite supérieure généralement plane (51) qui s'étend entre les extrémités supérieures de ladite paroi arrière (46) et ladite limite avant (47) dans une direction circonférentielle et disposée selon un espacement à partir du sommet de la tête (41) le long de ladite surface inférieure tronconique (43) ; et un fond plat généralement triangulaire (49), **caractérisée en ce que** la partie du filetage (53) prévue avec les découpes est espacée de façon axiale à partir de la pointe (54) de sorte qu'un certain nombre d'enroulements du filetage situés à la pointe (11) de la vis sont dépourvus desdites découpes (56).

14. Vis selon la revendication 13, **caractérisée en ce que** ladite partie de filetage (53) prévue avec les découpes (56) est une partie intermédiaire, ledit filetage (53) comprenant en outre un certain nombre d'enroulements de filetage dépourvus desdites découpes et disposés entre ladite partie intermédiaire et la tête (41) de la vis.

15. Vis selon l'une quelconque des revendications précédentes, **caractérisée en ce qu'**à partir du moment où la longueur totale de la tige est comprise entre environ 30 mm et environ 140 mm, le nombre d'enroulements (17) de la partie intermédiaire est d'environ 3.

16. Vis selon l'une quelconque des revendications 1 à 14, **caractérisée en ce qu'**à partir du moment où la longueur totale de la tige est comprise entre environ 150 mm et environ 240 mm, le nombre d'enroulements (17) de la partie intermédiaire est d'environ 4.

17. Vis selon l'une quelconque des revendications 1 à 14, **caractérisée en ce qu'**à partir du moment où la longueur totale de la tige est supérieure à environ 250 mm, le nombre d'enroulements (17) de la partie intermédiaire est d'environ 5.
